# FASCICULE DE BREVET EUROPEEN

(11) **EP 3 791 084 B1**
(45) Date de publication et mention de la délivrance du brevet: **25.10.2023**
(21) Numéro de dépôt: 19726063.1
(22) Date de dépôt: 24.04.2019
(51) Int. Cl.: F16D 65/00, F16D 65/092

(54) **ENSEMBLE À FRICTION POUR SYSTÈME DE FREIN À DISQUES APTE À FILTRER UNE PHASE GAZEUSE ISSUE DE LA FRICTION D'UNE GARNITURE**
REIBUNGSANORDNUNG FÜR EIN SCHEIBENBREMSSYSTEM, DAS IN DER LAGE IST, EINE GASFÖRMIGE PHASE ZU FILTERN, DIE SICH AUS DER REIBUNG EINER AUSKLEIDUNG ERGIBT
FRICTION ASSEMBLY FOR A DISC BRAKE SYSTEM ABLE TO FILTER A GASEOUS PHASE RESULTING FROM THE FRICTION OF A LINING

(30) Priorité: 09.05.2018 FR 1853966
(43) Date de publication de la demande: 17.03.2021
(73) Titulaire: Tallano Technologies, 75015 Paris (FR)
(72) Inventeur: ADAMCZAK, Loïc, 38390 Montalieu Vercieu (FR); ROCCA-SERRA, Christophe, 75016 Paris (FR)
(74) Mandataire: Plasseraud IP
(86) Numéro de dépôt international: PCT/FR2019/050968
(87) Numéro de publication internationale: WO 2019/215402

(56) Documents cités:
- DE-U1- 20 308 576
- FR-A1- 3 034 831
- FR-A1- 3 057 040
- JP-A- 2010 221 878
- US-A1- 2008 029 357
- US-A1- 2011 023 719

## Description

### Domaine de l'invention

La présente invention concerne les véhicules, notamment automobiles et également les matériels roulants ferroviaires. Plus spécifiquement, l'invention concerne le freinage des véhicules et des matériels roulants ferroviaires. L'invention concerne en outre les plaquettes de frein pour les ensembles à friction pour systèmes de frein à disques pour ces véhicules et ces matériels roulants ferroviaires.

On notera que l'invention peut aussi bien être mise en oeuvre dans des systèmes de freins à tambour que dans des systèmes freins à semelles, par exemple dans le domaine du ferroviaire. L'invention peut aussi être implémentée dans des freins industriels, comme par exemple pour éolienne ou ascenseur.

On notera que selon l'invention, le véhicule peut être de tout type et peut notamment être une voiture, un camion, un tracteur, un car ou un bus. De même, le matériel roulant ferroviaire peut être un train, un tramway ou encore un métropolitain.

Plus particulièrement, l'invention concerne les ensembles à friction non polluants pour système de freins à disques. L'invention concerne ainsi la lutte contre les émissions polluantes lors de la friction due au freinage.

### Arrière-plan technologique de l'invention

Un véhicule ou un matériel roulant ferroviaire comprend presque systématiquement un système de freinage. Le système de freinage peut notamment être un système de frein à disques. Le système de freinage comporte alors un disque solidaire d'une roue ou d'un essieu du véhicule ou du matériel roulant ferroviaire. Ainsi, lorsque la roue, ou l'essieu, entre en rotation pour permettre au véhicule ou au matériel roulant ferroviaire de se déplacer, le disque entre également en rotation.

C'est pourquoi, pour freiner le véhicule ou le matériel roulant ferroviaire, le système de frein à disques comprend des moyens de friction du disque. Les moyens de friction comportent notamment deux semelles qui portent chacune une garniture qui comprend un matériau de friction. Le matériau de friction est configuré pour venir en contact avec le disque. Les deux semelles portant les garnitures de friction sont disposées de part et d'autre du disque de façon à le prendre en tenaille lorsque le système de frein est actionné.

Cependant, lorsque la garniture de friction entre en contact avec le disque pendant que ce dernier est en rotation, la force de friction est telle que le matériau de friction, mais aussi le disque, émettent des particules nocives pour l'environnement. Les systèmes de freinage sont donc polluants.

C'est pourquoi, il est connu d'agencer un dispositif d'aspiration des particules issues du freinage dans le système de freinage. Le dispositif d'aspiration est destiné à aspirer les particules du freinage peu après l'émission de ces dernières. Ces dispositifs sont généralement relativement performants. Cependant, ils ne peuvent permettre de rendre les systèmes de frein à disques entièrement non-polluants.

### Objet de l'invention

Un but de l'invention est de fournir un ensemble à friction pour un système de frein à disques encore moins polluant.

### Bref résumé de l'invention

Pour ce faire, on prévoit selon l'invention un ensemble à friction pour système de frein à disques, comprenant :
- une garniture en matériau de friction, comportant une face de friction, une face de fixation opposée à la face de friction et une rainure de collecte ouverte sur la face de friction,
- une semelle, supportant la garniture, comportant un trou en communication pneumatique avec la rainure de collecte,
- une source de dépression configurée pour créer une dépression dans la rainure de collecte et le trou,
caractérisé en ce que l'ensemble à friction comporte un dispositif de filtration des gaz, en communication pneumatique avec la rainure de collecte et le trou, apte à capter des gaz issus de la friction de la garniture et provenant de la rainure de collecte.

D'après l'invention l'ensemble à friction comprend en outre des moyens pour condenser les gaz issus de la friction de la garniture; les gaz peuvent ainsi être captées à l'état liquide, voire solide.

Ainsi, le dispositif de filtration des gaz permet de filtrer une phase gazeuse produite lors de la friction de la garniture sur le disque. Le dispositif de filtration des gaz permet en effet de capter des gaz compris dans cette phase gazeuse.

Les inventeurs ont constaté que lors du freinage, la température à l'interface entre la garniture de friction et le disque est souvent au moins égale à 300°C et que l'atmosphère voisine de cette zone est oxydante. Ainsi, au-delà des particules solides émises, une phase gazeuse est aussi produite lors du freinage. Une partie de cette phase gazeuse reste sous forme de gaz et peut polluer l'environnement du véhicule. Une autre partie de cette phase gazeuse se condense dans l'environnement du véhicule, ce qui peut encrasser des parties du véhicule, ou se condenser en dehors du véhicule, ce qui génère une pollution solide sous forme essentiellement nano-particulaire.

Ainsi, l'ensemble à friction selon l'invention permet de collecter des gaz polluants en filtrant la phase gazeuse émise lors du freinage et donc d'empêcher que ces gaz soient relâchés dans l'atmosphère. En effet, ces gaz gagnent la rainure de collecte traversent le trou de la semelle et sont captés par le dispositif de filtration des gaz. Le dispositif de filtration des gaz peut notamment être un filtre qui laisse passer de l'air. L'invention permet donc de diminuer la pollution engendrée par l'actionnement d'un système de frein à disques qui comprend l'ensemble à friction tel que décrit ci-dessus. L'ensemble à friction selon l'invention est donc moins polluant.

En outre, dans divers modes de réalisation de l'invention, on peut avoir également recours à l'une et/ou à l'autre des dispositions suivantes :
- le dispositif de filtration des gaz comporte du charbon actif ; le charbon actif peut ainsi capter des gaz issus de la friction tout en laissant passer de l'air ;
- le charbon actif peut-être activé physiquement ou chimiquement ; dans l'idéal, le charbon actif comprend une portion de charbon activé physiquement et une portion de charbon activé chimiquement ;
- le dispositif de filtration des gaz comporte une masse de zéolite ;
- le dispositif de filtration des gaz comporte une masse de silice ;
- le dispositif de filtration des gaz comporte une masse d'alumines ;
- le dispositif de filtration des gaz comporte un canister ;
- le dispositif de filtration des gaz est apte à capter du dioxyde de carbone gazeux ;
- le dispositif de filtration des gaz est apte à capter du méthane gazeux ;
- le dispositif de filtration des gaz est apte à capter de l'oxyde d'azote gazeux ;
- le dispositif de filtration des gaz est apte à capter du dioxyde d'azote gazeux ;
- le dispositif de filtration des gaz est apte à capter de l'éthane gazeux ;
- le dispositif de filtration des gaz est apte à capter du phénol gazeux ;
- le dispositif de filtration des gaz est apte à capter un hexanol gazeux ;
- le dispositif de filtration des gaz est apte à capter de l'heptane gazeux ;
- le dispositif de filtration des gaz est apte à capter du cyclopentanone gazeux ;
- le dispositif de filtration des gaz est apte à capter un alcène gazeux ; l'ensemble à friction est donc moins polluant ;
- l'ensemble à friction comporte un filtre à particules, en communication pneumatique avec la rainure de collecte et le trou, configuré pour filtrer un air provenant de la rainure de collecte ; le filtre à particules permet de capter des particules solides qui présentent une dimension macroscopique et microscopique ;
- le filtre à particules est pneumatiquement disposé entre la rainure de collecte et le dispositif de filtration ; ainsi, l'air épuré des particules présentant une dimension macroscopique et microscopique gagne le dispositif de filtration, ce qui permet de protéger l'intégrité du dispositif de filtration ;
- les moyens pour condenser les gaz issus de la friction de la garniture comportent un échangeur à plaques ;
- l'échangeur à plaques est apte à être alimenté par un fluide frigorigène ;
- le fluide frigorigène est un fluide frigorigène destiné à climatiser un véhicule comprenant l'ensemble à friction ;
- l'ensemble à friction est relié à un système de climatisation du véhicule ;
- les moyens pour condenser les gaz issus de la friction de la garniture sont pneumatiquement disposés entre la rainure de collecte et le filtre à particules ;
- la garniture comprend un bord arrière, situé du côté où le disque est apte à sortir d'une interface avec la plaquette lorsque le disque tourne dans une direction d'avancement du véhicule, et un bord avant, la rainure de collecte étant agencée à proximité du bord arrière ; la captation des gaz est donc d'autant plus efficace ;
- la rainure de collecte est disposée à une distance du bord arrière inférieure ou égale à 5 millimètres, 10 millimètres, 15 millimètres ou 20 millimètres.

### Brève description des dessins

On va maintenant décrire, à titre d'exemple non limitatif, un mode de réalisation de l'invention à l'aide des figures suivantes :
- la figure 1 représente en perspective un système de frein à disques comprenant un ensemble à friction selon un mode de réalisation de l'invention,
- la figure 2 représente ce système de frein à disques, vu depuis un axe perpendiculaire à un plan principal d'un disque du système de frein à disques,
- la figure 3 illustre en perspective une plaquette de frein du système de frein à disque, et
- la figure 4 représente de façon schématique un agencement particulier d'un filtre à particule et d'un dispositif de filtration du système de frein selon une variante.

### Description détaillée d'un mode de réalisation de l'invention

On notera que par souci de clarté, seuls les éléments utiles à la compréhension des modes de réalisation décrits ont été représentés et seront détaillés.

En outre, sauf précision contraire, les expressions "sensiblement", "environ" etc. signifient qu'une légère variation par rapport à la valeur nominale considérée est possible, notamment d'un pourcentage faible, en particulier à 10% près.

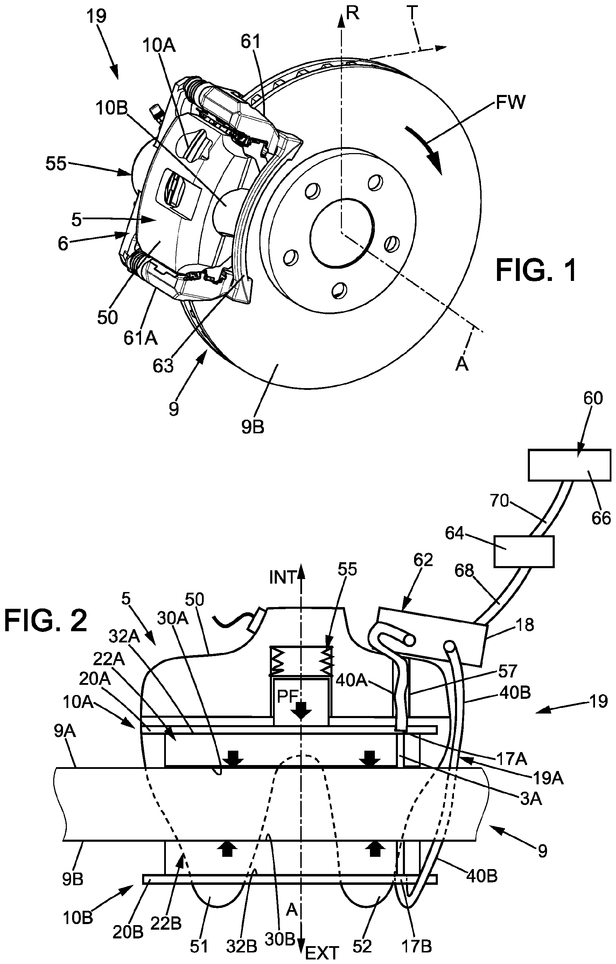

On a représenté aux figures 1 et 2 un système de frein à disque 19 selon l'invention pour un véhicule. Dans ce mode de réalisation, le véhicule est un véhicule automobile, dans le cas d'espèce une voiture légère. On notera toutefois que l'invention peut être mise en oeuvre pour tout type de véhicule, tel qu'un tracteur pour semi-remorque, un bus, un car ou un tracteur agricole, ou encore pour tout type de matériel roulant ferroviaire, tel qu'une locomotive ou un wagon d'un train pour le transport d'humains, de marchandises, d'un métropolitain ou d'un tramway. L'invention peut aussi être mise en oeuvre pour des freins industriels, par exemple pour des éoliennes ou des ascenseurs.

Le système de frein à disque 19 selon l'invention comporte un disque 9, d'axe A solidaire d'une roue du véhicule. L'axe A s'étend ainsi perpendiculairement au disque 9 et passe par un centre du disque 9.

Le disque 9 présente une face latérale 9A et une face latérale 9B opposée. Les faces latérales 9A, 9B sont perpendiculaires à l'axe A. Le disque 9 est également relié à un mécanisme de transmission, par exemple par l'intermédiaire notamment d'un moyeu, lui-même relié à un moteur du véhicule. Ainsi, le mécanisme de transmission permet de transmettre à la roue du véhicule, par l'intermédiaire du disque 9, un mouvement de rotation autour de l'axe A et ce, afin de déplacer le véhicule.

En outre, le système de frein à disque 19 comporte un étrier 5 qui enserre, de façon à prendre en sandwich, une portion du disque 9. Comme illustré notamment sur la figure 2, l'étrier 5 se présente sous la forme d'un corps principal 50 qui présente une forme générale en U de façon à enserrer le disque 9. En outre, le corps principal 50 comporte une cavité permettant de loger un piston 55. L'étrier 5 comporte aussi deux doigts 51, 52. Le piston 55 est apte à exercer une force PF selon une direction A2 repérée sur la figure 1 et qui est parallèle à l'axe A du disque et ce, lorsque le système de frein à disques 19 est actionné par un conducteur du véhicule.

Sur la figure 1, on a représenté un sens de rotation FW du disque 9 qui correspond à une marche avant du véhicule. On a également représenté une direction tangentielle T sur une circonférence du disque 9.

On définit aussi un côté arrière et un côté avant opposé. Le côté arrière correspond au côté où le disque 9 sort de l'interface avec l'étrier 5 lorsque le disque 9 tourne dans la direction d'avancement du véhicule. Le côté avant est le côté opposé et correspond au côté où le disque 9 entre dans l'interface avec l'étrier 5 lorsque le disque 9 tourne dans la direction d'avancement du véhicule. De plus, on définit pour une direction radiale R allant de l'axe A vers la circonférence du disque 9, une direction qui va de l'intérieur vers l'extérieur.

Le système de frein à disque 19 comprend un support d'étrier 6 qui est fixé à un organe du véhicule. Cet organe peut notamment être un bras de suspension du véhicule. En outre, le support d'étrier 6 comprend deux pontets 61, 61A disposés à deux extrémités longitudinales respectivement arrière et avant de l'étrier 5 et un arc de liaison 63 qui relie les deux pontets 61, 61A. Le pontet 61 est ainsi un pontet arrière et le pontet 61A est un pontet avant.

Le système de frein à disque 19 comporte aussi un ensemble à friction 19A qui comprend notamment deux plaquettes de frein 10A, 10B logées dans l'étrier 5. Les deux plaquettes de frein 10A, 10B sont disposées de part et d'autre du disque 9. La plaquette de frein 10A est disposée en regard de la face latérale 9A du disque 9. La plaquette de frein 10B est disposée en regard de la face latérale 9B du disque 9. Ainsi, les deux plaquettes de frein 10A, 10B sont disposées symétriquement par rapport à un plan comportant le disque 9 et perpendiculaire à l'axe A du disque 9.

Le piston 55 de l'étrier 5 est agencé pour exercer la force PF sur la plaquette de frein 10A de sorte que les deux plaquettes 10A, 10B viennent en contact avec le disque 9 de façon à freiner le véhicule lorsque le système de frein à disque 19 est actionné par un conducteur du véhicule. On note que dans l'exemple illustré, l'étrier 5 est monté « flottant » dans le support d'étrier 6, le long de l'axe A. Ainsi, l'étrier 5 peut se déplacer parallèlement à l'axe A notamment pour compenser l'usure progressive des plaquettes 10A, 10B. En revanche l'étrier 5 est maintenu solidaire du support d'étrier 6 selon les autres translations et rotations potentielles. Le montage flottant est habituellement réalisé grâce à des colonnettes coulissantes selon l'axe A.

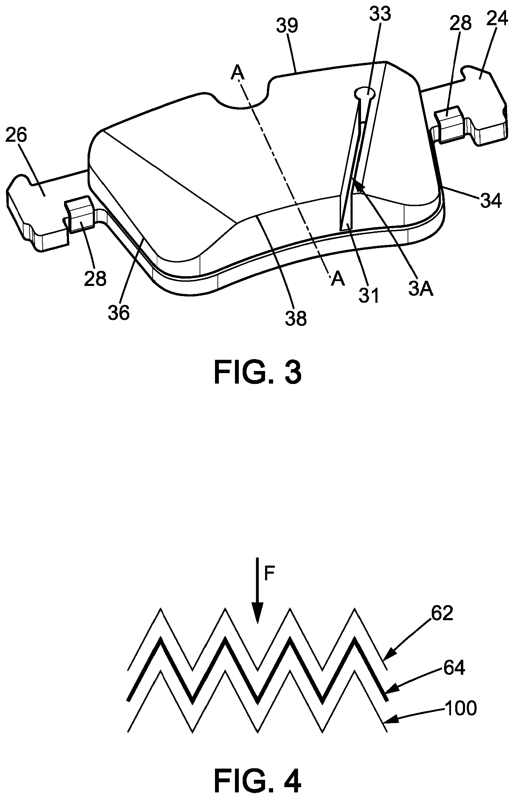

Les plaquettes de frein 10A, 10B ont des structures identiques. Elles comportent chacune une semelle respective 20A, 20B qui supporte une garniture de friction respective 22A, 22B. Seule la plaquette de frein 10A est illustrée en figure 3, cependant, la figure 10B est semblable.

Les semelles 20A, 20B, appelées parfois embases métalliques, se présentent sous la forme d'une plaque pleine métallique et d'épaisseur sensiblement constante. Cette épaisseur peut notamment être comprise entre 3 et 5 millimètres. La forme générale faciale des semelles 20A, 20B est rectangulaire, avec toutefois une courbure qui suit la courbure de la face latérale 9A, 9B du disque 9 sur laquelle les garnitures de friction 22A, 22B vont venir exercer leur effort.

Les semelles 20A, 20B comportent aussi des moyens de fixation au corps principal 55 de l'étrier 5. Ici, ces moyens comprennent un bras arrière 24 et un bras avant 26 qui permettent de fixer la semelle 20A, 20B au corps principal 55 de l'étrier 5 au moyen de crochets 28. En outre, les semelles 20A, 20B comportent une face de fixation à laquelle est fixée la garniture de friction 22A, 22B respective.

Les garnitures de friction 22A, 22B se présentent sous la forme d'un corps en matériau de friction apte à venir en contact avec la face latérale 9A du disque 9 afin de freiner le véhicule. Le matériau de friction est parfois appelé « ferodo ».

Les garnitures de frictions 22A, 22B comportent donc une face de friction 30A, 30B respective destinée à entrer en contact direct avec la face latérale 9A, 9B du disque 9. Les garnitures de friction 22A, 22B comportent aussi une face de fixation 32A, 32B, respective, opposée à la face de friction 30A, 30B, et fixée directement à la face de fixation de la semelle 20.

De plus, en référence aux côtés précédemment définis, les garnitures de friction 22A, 22B comportent un bord arrière 34 et un bord avant 36 opposé. Les garnitures de friction 22A, 22B comportent également un bord intérieur 38 et un bord extérieur 39 radialement.

Lorsque le système de frein à disque 19 est actionné, le contact entre les faces de friction 30A, 30B des garnitures de friction 22A, 22B des plaquettes de frein 10A, 10B et les faces latérales 9A, 9B du disque 9 génère l'émission de particules de freinage polluantes. Ces particules de freinage correspondent à des particules du matériau de friction qui se détachent des garnitures de friction 22A, 22B par abrasion avec les faces latérale 9A, 9B du disque 9 ainsi qu'à des particules, à l'état solide, qui se détachent du disque 9. En outre, une phase gazeuse est émise lors de cette friction lors du freinage.

Cette phase gazeuse comprend notamment au moins l'un des composés suivant selon la composition de la garniture de friction, de la température de freinage et des conditions atmosphériques auxquelles a lieu le freinage : dioxyde de carbone, méthane, oxyde d'azote, dioxyde d'azote, éthane, phénol, hexanol, heptane, cyclopentanone et alcène. Cette phase gazeuse comprend aussi d'autres composés en quantités beaucoup moins importantes tels que le styrène par exemple.

En outre, lorsqu'une partie de cette phase gazeuse se condense, dans ou hors du véhicule, elle entraine la libération de particules nanométriques très volatiles. Ces particules solides et cette phase gazeuse sont polluantes et sont nocives pour la santé humaine et peuvent également détériorer des parties du véhicules ou les salir. La partie de cette phase gazeuse qui ne se condense pas engendre une pollution atmosphérique, tout comme d'ailleurs celle qui se condense, et forme alors un nuage de nanoparticules.

C'est pourquoi, l'ensemble à friction 19 du système de frein à disque 19 comporte des moyens de dépollution décrits ci-après.

Les garnitures de friction 22A, 22B comporte une rainure de collecte 3A, 3B respective. Les rainures de collecte 3A, 3B sont ouvertes sur les faces de friction 30A, 30B respectives et sont agencées à proximité du bord arrière 34 respectif des garnitures de friction 22A, 22B. Ainsi, en marche avant du véhicule, les particules solides de freinage et la phase gazeuse émise sont mécaniquement entrainées vers les rainures de collecte 3A, 3B, ce qui permet d'améliorer l'efficacité de la collecte. Lorsque le véhicule est freiné alors qu'il est en marche avant, les particules solides de freinage et la phase gazeuse sont en effet émises vers l'avant FW, en référence à la marche avant du véhicule. Ainsi, la captation des particules solides de freinage et des gaz issus du freinage est d'autant plus efficace que les rainures de collecte 3A, 3B sont disposées près du bord arrière 34 des garnitures de friction 30A, 30B. Ainsi, de manière générale, les rainures de collecte 3A, 3B sont disposées à une distance du bord arrière 34 inférieure ou égale à 5 millimètres, 10 millimètres, 15 millimètres, 20 millimètres, 30 millimètres ou 50 millimètres.

De plus, les rainures de collecte 3A, 3B sont uniques, sensiblement rectilignes et continues. Elles sont de largeur constante. En outre, les rainures de collecte 3 sont directement creusées dans le matériau de friction et ce, jusqu'aux semelles 20A, 20B.

Les rainures de collecte 3A, 3B s'étendent en outre entre une extrémité débouchante 31 et une extrémité borgne 33. L'extrémité débouchante 31 est disposée sur le bord intérieur 38 de la garniture de friction 22A, 22B. L'extrémité borgne 33 est disposée à proximité du bord extérieur 39. Bien entendu, l'extrémité débouchante 31 peut aussi être disposée sur le bord extérieur 39. L'extrémité borgne 33 peut aussi être disposée à proximité du bord intérieur 38.

Les semelles 20A, 20B comportent chacune un trou 17A, 17B respectif qui débouche dans la rainure de collecte 3A, 3B. Les trous 17A, 17B sont sensiblement en regards d'une extrémité borgne 33 respective. Les trous 17 peuvent être plus généralement disposés à proximité de l'extrémité borgne 33. Le trou 17A est ainsi en communication pneumatique avec la rainure de collecte 3A. De même, le trou 17B est en communication pneumatique avec la rainure de collecte 3B.

De plus, comme illustré sur la figure 2, le système de frein à disques 19 comporte deux tuyaux souples 40A, 40B.

Le tuyau souple 40A est connecté au trou 17A de la semelle 20A de la plaquette de frein 10A. Ce tuyau souple 40A traverse le corps principal 55 de l'étrier 5. Pour ce faire, le corps principal 55 de l'étrier 5 comporte un canal 57 traversant.

Le tuyau souple 40B est connecté au trou 17B de la semelle 20B de la plaquette de frein 10B. Le tuyau souple 40B contourne le corps principal 55 de l'étrier 5. Bien entendu, selon une variante, le tuyau souple 40B peut aussi traverser le corps principal 55 de l'étrier 5, par un canal dédié.

Ainsi, le tuyau souple 40A est en communication pneumatique avec le trou 17A et la rainure de collecte 3A. Le tuyau souple 40B est en communication pneumatique avec le trou 17B et la rainure de collecte 3B.

L'ensemble à friction 19A comprend en outre un dispositif de dépollution 60 en communication pneumatique avec les tuyaux souples 17A, 17B comme illustré sur la figure 2. Le dispositif de dépollution 60 a pour fonction de limiter la pollution émise lors du freinage.

Le dispositif de dépollution 60 comprend ainsi un filtre à particules 62, un dispositif de filtration 64 et une source d'aspiration 66 qui se présente par exemple sous la forme d'une turbine. Le filtre à particules 62 est en communication pneumatique avec les trous 17A, 17B et donc les rainures de collecte 3A, 3B par les tuyaux souples 40A, 40B. Le filtre à particule 62 est en communication pneumatique avec le dispositif de filtration 64 au moyen d'un tuyau souple 68. Enfin, le dispositif de filtration 64 est en communication pneumatique avec la source d'aspiration 66 au moyen d'un tuyau souple 70. Ainsi, le filtre à particule 62 est pneumatiquement disposé entre les rainures de collecte 3A, 3B et le dispositif de filtration 64.

Ainsi, l'ensemble des éléments suscités sont en communications pneumatiques. Notamment, le dispositif de filtration 64 est en communication pneumatique avec les trous 17A, 17B et les rainures de collecte 3A, 3B. En outre, la source d'aspiration 66 est donc configurée pour créer dépression dans les rainures de collecte 3A, 3B et dans les trous 17A, 17B.

Le filtre à particules 62 est configuré pour filtrer, de l'air provenant des rainures de collecte 3A, 3B et ayant traversé les trous 17A, 17B et les tuyaux souples 40A, 40B des particules solides présentant des dimensions micrométriques ou millimétriques, voire centimétriques.

Le dispositif de filtration 64 a pour fonction de capter des gaz compris dans la phase gazeuse issue de la friction des garnitures de freinage 22A, 22B sur le disque 9, et ayant gagné les rainures de collecte 3A, 3B, traversé les trous 17A, 17B, les tuyaux souples 40A, 40B et le filtre à particules 62. Pour ce faire, le dispositif de filtration 64 comprend de préférence du charbon actif qui comporte avantageusement une portion de charbon activé physiquement et une portion de charbon active chimiquement. Le dispositif de filtration 64 peut aussi comprendre un canister. Le canister et le charbon actif sont configurés pour capter au moins l'un des composés suivant à l'état gazeux : dioxyde de carbone, méthane, oxyde d'azote, dioxyde d'azote, éthane, phénol, hexanol, heptane, cyclopentanone et alcène.

Selon l'invention le dispositif de dépollution 60 comporte des moyens pour condenser des gaz issus de la friction des garnitures 22A, 22B. Ces moyens comportent avantageusement un échangeur à plaques qui peut être alimenté par un fluide frigorigène qui est un fluide frigorigène d'un système de climatisation du véhicule. Ainsi, le dispositif de dépollution 60 est apte à condenser des gaz émis lors du freinage et à les stocker à l'état liquide, voire solide. Les moyens pour condenser les gaz issus de la friction des garnitures 22A, 22B sont pneumatiquement disposés entre la rainure de collecte 3A, 3B et le filtre à particules 62. Ainsi, seule la phase gazeuse gagne le dispositif de filtration 64.

Ainsi, lors du freinage, la source de dépression 66 est actionnée et la phase gazeuse et les particules solides émises depuis les garnitures 22A, 22B et le disque 9 gagnent les rainures de collecte 3A, 3B, les trous 17A, 17B, les tuyaux souples 40A, 40B et le filtre à particules 62 où les particules solides sont capturées. Ensuite, la phase gazeuse continue sa course dans le tuyau 68 vers le dispositif de filtration 64 où elle est filtrée. Ainsi, des gaz de la phase gazeuse sont captés. Ainsi, la phase gazeuse filtrée peut être relâchée dans l'atmosphère.

L'ensemble à friction 19A et par conséquent le système de freinage 19 sont donc moins polluants.

On pourra bien entendu apporter à l'invention de nombreuses modifications sans sortir du cadre de celle-ci.

L'ensemble à friction 19A pourra notamment comprendre uniquement le dispositif de filtration 64 et pas le filtre à particules 62.

De plus, le filtre à particules 62, le dispositif de filtration 64 et la source de dépression 66 sont communs pour les plaquettes de frein 10A, 10B. On pourra également prévoir un filtre à particule 62, un dispositif de filtration 64 et une source de dépression 66 spécifique pour la plaquette de frein 10A et pour la plaquette de frein 10B.

On pourra aussi varier l'agencement du filtre à particule 62 et du dispositif de filtration 64 destiné à filtrer la phase gazeuse. On a notamment représenté à la figure 4 un agencement possible et plus compact que celui précédemment illustré. On a représenté sur cette figure à l'aide de la flèche F une direction de la phase gazeuse provenant de la rainure de collecte 3A, 3B. Le filtre à particule 62 et le dispositif de filtration 64 se présentent sous forme d'une fine couche de matériau. Le filtre à particule 62 et le dispositif de filtration 64 sont ainsi disposés l'un sur l'autre et en outre sur une couche support 100. Ainsi, le dispositif de filtration 64 est disposé entre la couche support 100 et le filtre à particule 62.

## Revendications

1. Ensemble à friction (19A) pour système de frein (19), comprenant :
- une garniture en matériau de friction (22A, 22B), comportant une face de friction (30A, 30B), une face de fixation (32A, 32B) opposée à la face de friction (30A, 30B) et une rainure de collecte (3A, 3B) ouverte sur la face de friction (30A, 30B),
- une semelle (20A, 20B), supportant la garniture (22A, 22B), comportant un trou (17A, 17B) en communication pneumatique avec la rainure de collecte (3A, 3B),
- une source de dépression (66) configurée pour créer une dépression dans la rainure de collecte (3A, 3B) et le trou (17A, 17B), **caractérisé en ce que** l'ensemble à friction comporte
- un dispositif de filtration des gaz (64), en communication pneumatique avec la rainure de collecte (3A, 3B) et le trou (17A, 17B), apte à capter des gaz issus de la friction de la garniture (22A, 22B) et provenant de la rainure de collecte (3A, 3B), et
- des moyens pour condenser des gaz issus de la friction de la garniture (22A, 22B).

2. Ensemble à friction (19A) selon la revendication précédente, dans lequel le dispositif de filtration des gaz (64) comporte du charbon actif et/ou une masse de zéolite et/ou une masse de silice et/ou une masse d'alumine.

3. Ensemble à friction (19A) selon l'une quelconque des revendications précédentes, dans lequel le dispositif de filtration des gaz (64) comporte un canister.

4. Ensemble à friction (19A) selon l'une quelconque des revendications précédentes, dans lequel le dispositif de filtration (64) est apte à capter des gaz de dioxyde de carbone et/ou de méthane et/ou d'oxyde d'azote et/ou de dioxyde d'azote et/ou d'éthane et/ou de phénol et/ou d'un hexanol et/ou d'heptane et/ou de cyclopentanone et/ou d'un alcène.

5. Ensemble à friction (19A) selon l'une quelconque des revendications précédentes, comportant un filtre à particules (62), en communication pneumatique avec la rainure de collecte (3A, 3B) et le trou (17A, 17B), configuré pour filtrer un air provenant de la rainure de collecte (3A, 3B).

6. Ensemble à friction (19A), selon la revendication précédente, dans lequel le filtre à particules (62) est pneumatiquement disposé entre la rainure de collecte (3A, 3B) et le dispositif de filtration (64).

7. Ensemble à friction (19A) selon l'une quelconque des revendications précédentes, dans lequel les moyens pour condenser des gaz issus de la friction de la garniture (22A, 22B) comportent un échangeur à plaques.

8. Ensemble à friction (19A) selon la revendication précédente, dans lequel l'échangeur à plaques est apte à être alimenté par un fluide frigorigène.

9. Ensemble à friction (19A) selon la revendication 6 et l'une quelconque des revendications précédentes, dans lequel les moyens pour condenser des gaz issus de la friction de la garniture (22A, 22B) sont pneumatiquement disposés entre la rainure de collecte (3A, 3B) et le filtre à particules (62).

## Patentansprüche

1. Reibungsbaugruppe (19A) für ein Bremssystem (19), umfassend:
- einen Reibmaterialbelag (22A, 22B) mit einer Reibfläche (30A, 30B), einer Befestigungsfläche (32A, 32B), die der Reibfläche (30A, 30B) gegenüberliegt, und einer Sammelnut (3A, 3B), die zur Reibfläche (30A, 30B) hin offen ist,
- eine Sohle (20A, 20B), die den Belag (22A, 22B) trägt mit einem Loch (17A, 17B) in pneumatischer Verbindung mit der Sammelnut (3A, 3B),
- eine Unterdruckquelle (66) die dazu ausgebildet ist, einen Unterdruck in der Sammelnut (3A, 3B) und dem Loch (17A, 17B) zu erzeugen, **dadurch gekennzeichnet, dass** die Reibungsbaugruppe Folgendes umfasst:
- eine Gasfiltervorrichtung (64), in pneumatischer Verbindung mit der Sammelnut (3A, 3B) und dem Loch (17A, 17B), die dazu geeignet ist, Gase aus der Reibung des Belags (22A, 22B) und aus der Sammelnut (3A, 3B) aufzufangen, und
- Mittel zum Kondensieren von Gasen aus der Reibung des Belags (22A, 22B).

2. Reibungsbaugruppe (19A) nach dem vorhergehenden Anspruch, wobei die Gasfiltervorrichtung (64) Aktivkohle und/oder eine Zeolithmasse und/oder eine Siliziumdioxidmasse und/oder eine Aluminiumoxidmasse umfasst.

3. Reibungsbaugruppe (19A) nach einem der vorhergehenden Ansprüche, wobei die Gasfiltervorrichtung (64) einen Kanister umfasst.

4. Reibungsbaugruppe (19A) nach einem der vorhergehenden Ansprüche, wobei die Filtervorrichtung (64) dazu geeignet ist, Gase von Kohlendioxid und/oder Methan und/oder Stickoxid und/oder Stickstoffdioxid und/oder Ethan und/oder Phenol und/oder einem Hexanol und/oder Heptan und/oder Cyclopentanon und/oder einem Alken aufzufangen.

5. Reibungsbaugruppe (19A) nach einem der vorhergehenden Ansprüche, mit einem Partikelfilter (62) in pneumatischer Verbindung mit der Sammelnut (3A, 3B) und dem Loch (17A, 17B), der dazu ausgebildet ist, Luft aus der Sammelnut (3A, 3B) zu filtern.

6. Reibungsbaugruppe (19A) nach dem vorhergehenden Anspruch, wobei der Partikelfilter (62) pneumatisch zwischen der Sammelnut (3A, 3B) und der Filtervorrichtung (64) angeordnet ist.

7. Reibungsbaugruppe (19A) nach einem der vorhergehenden Ansprüche, wobei die Mittel zum Kondensieren von Gasen aus der Reibung des Belags (22A, 22B) einen Plattenwärmetauscher umfassen.

8. Reibungsbaugruppe (19A) nach dem vorhergehenden Anspruch, wobei der Plattenwärmetauscher dazu geeignet ist, mit einem Kältemittel versorgt zu werden.

9. Reibungsbaugruppe (19A) nach Anspruch 6 und einem der vorhergehenden Ansprüche, wobei die Mittel zum Kondensieren von Gasen aus der Reibung des Belags (22A, 22B) pneumatisch zwischen der Sammelnut (3A, 3B) und dem Partikelfilter (62) angeordnet sind.

## Claims

1. Friction assembly (19A) for a brake system (19), comprising:
- a lining made of friction material (22A, 22B), comprising a friction face (30A, 30B), an attachment face (32A, 32B) opposite the friction face (30A, 30B), and a collection groove (3A, 3B) that is open on the friction face (30A, 30B),
- a sole plate (20A, 20B), supporting the lining (22A, 22B), comprising a hole (17A, 17B) in pneumatic communication with the collection groove (3A, 3B),
- a negative pressure source (66) configured to create negative pressure in the collection groove (3A, 3B) and the hole (17A, 17B),
**characterized in that** the friction assembly (19A) comprises
- a gas filtration device (64), in pneumatic communication with the collection groove (3A, 3B) and the hole (17A, 17B), capable of capturing gases resulting from the friction of the lining (22A, 22B) and coming from the collection groove (3A, 3B), and
- means for condensing gases resulting from friction of the lining (22A, 22B).

2. Friction assembly (19A) according to the preceding claim, wherein the gas filtration device (64) comprises activated carbon and/or a mass of zeolite and/or a mass of silica and/or a mass of alumina.

3. Friction assembly (19A) according to any one of the preceding claims, wherein the gas filtration device (64) comprises a canister.

4. Friction assembly (19A) according to any one of the preceding claims, wherein the filtration device (64) is capable of capturing gases of carbon dioxide and/or methane and/or nitrogen oxide and/or nitrogen dioxide and/or ethane and/or phenol and/or hexanol and/or heptane and/or cyclopentanone and/or an alkene.

5. Friction assembly (19A) according to any one of the preceding claims, comprising a particulate filter (62) in pneumatic communication with the collection groove (3A, 3B) and the hole (17A, 17B), configured to filter air coming from the collection groove (3A, 3B).

6. Friction assembly (19A) according to the preceding claim, wherein the particulate filter (62) is pneumatically positioned between the collection groove (3A, 3B) and the filtration device (64).

7. Friction assembly (19A) according to any one of the preceding claims, wherein the means for condensing gases resulting from friction of the lining (22A, 22B) comprise a plate heat exchanger.

8. Friction assembly (19A) according to the preceding claim, wherein the plate heat exchanger is adapted to be supplied with a refrigerant fluid.

9. Friction assembly (19A) according to claim 6 and any one of the preceding claims, wherein the means for condensing gases resulting from friction of the lining (22A, 22B) are pneumatically positioned between the collection groove (3A, 3B) and the particulate filter (62).
